# EUROPEAN PATENT SPECIFICATION

(11) **EP 2 911 787 B1**
(45) Date of publication and mention of the grant of the patent: **01.03.2017**
(21) Application number: 12887114.2
(22) Date of filing: 26.10.2012
(51) Int. Cl.: H01M 8/1018, H01M 8/1004, B02C 19/18, B01F 5/06, H01M 4/88

(54) **FUEL CELL MEMBRANE ELECTRODE ASSEMBLY FABRICATION PROCESS**
HERSTELLUNGSVERFAHREN FÜR BRENNSTOFFZELLENMEMBRANELEKTRODENBAUGRUPPE
PROCESSUS DE FABRICATION D'ENSEMBLE ÉLECTRODE-MEMBRANE DE PILE À COMBUSTIBLE

(43) Date of publication of application: 02.09.2015
(73) Proprietor: Audi AG, 85045 Ingolstadt (DE)
(72) Inventor: MARZULLO, Jesse M., Enfield, Connecticut 06082 (US); BAJOREK, William J., Cromwell, Connecticut 06416 (US)
(86) International application number: PCT/US2012/062057
(87) International publication number: WO 2014/065807

(56) References cited:
- JP-A- H10 270 054
- JP-A- 2010 086 859
- JP-A- 2011 034 678
- JP-A- 2012 015 090
- KR-A- 20100 038 541
- US-A1- 2003 086 862
- US-A1- 2006 079 623
- US-A1- 2010 086 821

## Description

### 1. Technical Field

The subject matter of this disclosure pertains generally to fuel cells. More particularly, the subject matter of this disclosure relates to processes for fabricating membrane electrode assemblies for use in fuel cells.

### 2. Description of the Related Art

Fuel cells are useful for generating electricity. Fuel cell components facilitate an electrochemical reaction between reactants such as hydrogen and oxygen. Fuel cells typically include a membrane electrode assembly where the electrochemical reaction occurs. Membrane electrode assemblies typically include a membrane between an anode electrode and a cathode electrode.

Some fuel cell arrangements include a membrane electrode assembly established by depositing a catalyst solution onto the membrane. A layer of the deposited catalyst material establishes the electrodes on opposite sides of the membrane. This approach, however, presents a variety of challenges that interfere with economically obtaining a membrane electrode assembly that has desirable performance characteristics.

US 2003/086862 A1 discloses a rhodium sulfide electrocatalyst formed by heating an aqueous solution of rhodium salt until a steady state distribution of isomers is obtained and then sparging hydrogen sulfide into the solution to form the rhodium sulfide and a membrane electrode assembly with the said electrode and a process for electrolyzing hydrochloric acid.

US2010/086821 discloses a method for manufacturing a membrane-electrode assembly (MEA) which is a core element of a polymer electrolyte membrane fuel cell for a vehicle and an electrode therefor. The method for manufacturing the MEA is implemented to provide a highly-concentrated catalyst slurry which is uniformly dispersed, compared to conventional catalyst slurries, by a catalyst slurry manufacturing process including a vacuum defoaming process.

### SUMMARY

An exemplary method of processing a catalyst ink includes ultrasonicating the catalyst ink. The exemplary method includes high shear mixing the catalyst ink. In the exemplary method the ultrasonicating is performed before the high shear mixing.

Another exemplary method of making a membrane electrode assembly includes ultrasonicating a catalyst ink. This exemplary method includes high shear mixing the catalyst ink. After the ultrasonicating and the high shear mixing, the catalyst ink is deposited onto a membrane to establish a catalyst Layer on the membrane.

The various features and advantages of a disclosed example embodiment will become apparent to those skilled in the art from the following detailed description. The drawings that accompany the detailed description can be briefly described as follows.

### BRIEF DESCRIPTION OF THE DRAWINGS

Figure 1 is a flowchart diagram summarizing an example catalyst ink processing technique with an optional membrane electrode assembly fabrication step.
Figure 2 schematically illustrates an arrangement useful for processing a catalyst ink with an optional membrane electrode assembly fabrication according to an embodiment of this invention.

### DETAILED DESCRIPTION

A membrane electrode assembly includes a membrane and at least one electrode layer on at least one side of the membrane. The electrode layer is established by depositing a catalyst ink onto the membrane. The catalyst ink is treated so that the resulting assembly provides performance characteristics that are useful for a wide range of operating conditions and achieves this even with relatively low precious metal loading.

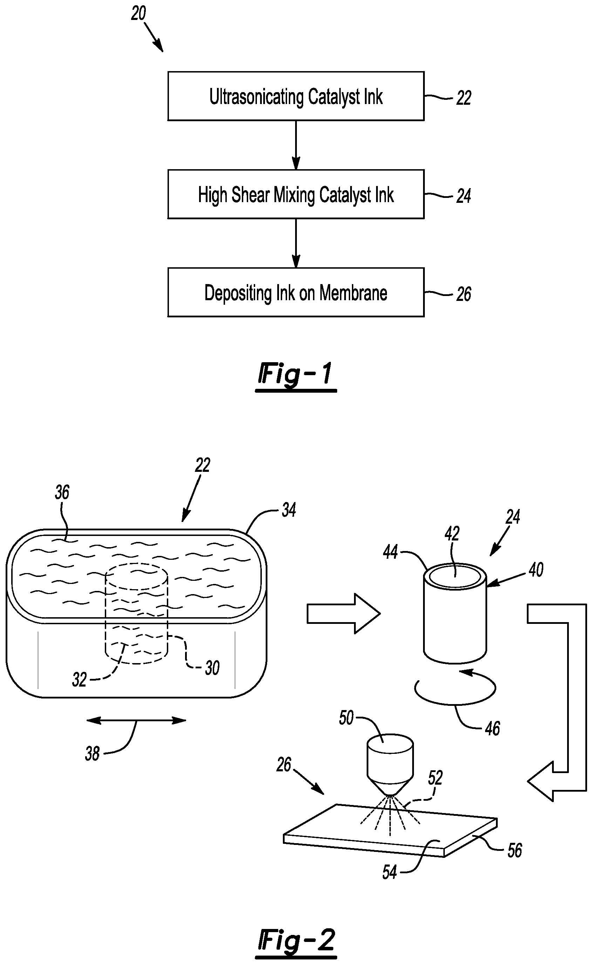

Figure 1 includes a flow chart diagram 20 that summarizes an example approach. This example includes ultrasonicating a catalyst ink at 22. An example catalyst ink includes a catalyst phase, an ionomer phase and a buffer or solvent. Ultrasonicating the catalyst ink reduces particle size by breaking down agglomerate particle size to a desired range. One example includes using ultrasonification until agglomerate particle size is below 1 micron.

High shear mixing is used at 24. The high shear mixing establishes a desired amount of ionomer coating over the catalyst particles. The catalyst ink is then ready for various uses.

The example of Figure 1 includes an optional step at 26 where the processed catalyst ink is deposited onto a substrate to establish an electrode layer.

Figure 2 schematically illustrates an arrangement for carrying out the process summarized in the flow chart 20 of Figure 1. In this example, the ultrasonicating is accomplished by placing a vial 30 containing the catalyst ink 32 into an ultrasonic bath 34. In this example, the ultrasonic bath 34 is filled with a liquid 36 such as water. Ultrasonic vibration schematically illustrated by 38 is used for ultrasonicating or ultrasonically mixing the catalyst ink 32 within the vial 30. One example includes ultrasonicating the catalyst ink for a period of time of under one hour up to five hours. This breaks down the catalyst particle size into a desirable size range.

The high shear mixing is accomplished in the example of Figure 2 by a high shear mixing device 40 comprising concentric cylinders 42 and 44. Relative rotation between the cylinders as schematically shown at 46 applies high shear forces during mixing. The high shear mixing distributes ionomer over the catalyst particles within the catalyst ink. In some examples, only a few minutes of high shear mixing is required. Some examples include high shear mixing for less than ten minutes.

Figure 2 includes an optional or possible use of the processed catalyst ink. This example includes a deposition technique at 26 for fabricating an item such as a fuel cell component. A deposition device such as a sprayer 50 deposits the catalyst ink schematically shown at 52 to establish a layer 54 on a substrate 56. In one example, the substrate 56 comprises a membrane, a gas diffusion layer and a decal, such as polytetraflouroethylene, which is useful as a fuel cell membrane electrode assembly.

The ultrasonicating portion of the illustrated process is carried out before the high shear mixing. It is possible to perform the high shear mixing before ultrasonicating the liquid. When ultrasonicating is performed first, that provides particle size breakdown before the ionomer coating that occurs during the high shear mixing. The combination of ultrasonicating and high shear mixing the catalyst ink results in a catalyst ink having desired properties. For example, the disclosed technique yields a catalyst ink that is useful for making a superiorly performing membrane electrode assembly and improved economies associated with the fabrication process.

This invention includes the discovery that ultrasonication alone does not result in adequate coverage of the catalyst particles with ionomer. Adequate coverage is necessary for good catalyst utilization. The combination of ultrasonication and high shear mixing provides adequate ionomer coverage. The ultrasonicating provides the particle reduction while the high shear mixing provides good ionomer distribution. This combination results in unexpectedly improved catalyst utilization. For example, a membrane electrode assembly prepared according to an embodiment of this invention yields better catalyst utilization at low current compared to assemblies prepared by other processes. Ionic transport is improved at intermediate and high current operating conditions. Additionally, transport is improved by having thinner ionomer films (better limiting current).

One feature of the illustrated example is that ultrasonicating first creates the maximum particle surface area within the catalyst ink. Following the ultrasonicating with high shear mixing significantly improves the ionomer coverage over that surface area. Additionally, the high shear mixing performed after ultrasonicating does not cause any re-agglomeration of the particles. In other words, following ultrasonicating with high shear mixing according to the illustrated example does not increase the particle size beyond that achieved by ultrasonicating.

The disclosed example technique allows for using a lower amount of precious metal in an active catalyst. The disclosed technique provides the unexpected advantage of avoiding lower performance characteristics even with a relatively lower amount of precious metal, such as platinum.

The disclosed example technique avoids damaging the catalyst as may occur with traditional ball milling approaches. The disclosed example technique is appropriate for use with sensitive structures like core shell based catalyst or compositions that include very small platinum particles. Additionally, the disclosed technique provides manufacturing economies because it is faster than a low energy method that includes roller milling yet it is lower intensity than other relatively quick methods such as planetary ball milling. A faster process without damage to the catalyst results in improved fabrication economies.

## Claims

1. A method of processing a catalyst ink, comprising the steps of:
ultrasonicating a catalyst ink; and
high shear mixing the catalyst ink, wherein
comprising performing the ultrasonicating before performing the high shear mixing.

2. The method of claim 1, comprising performing the ultrasonicating until a catalyst particle size on the order of one micron.

3. The method of claim 1, wherein the catalyst ink comprises a catalyst phase, an ionomer phase and a buffer.

4. The method of claim 1, comprising performing the ultrasonicating for a period of time that is less than one hour.

5. The method of claim 1, comprising performing the ultrasonicating for a period of less than five hours.

6. The method of claim 1, comprising performing the high shear mixing for a period of time less than ten minutes.

7. The method of claim 1, comprising depositing the catalyst ink onto a substrate.

8. The method of claim 7, wherein the deposited catalyst ink and the substrate comprise a fuel cell component.

9. The method of claim 8, wherein the fuel cell component comprises a membrane electrode assembly.

## Patentansprüche

1. Verfahren zum Verarbeiten einer Katalysatortinte, aufweisend die Schritte von:
Ultraschallbehandeln einer Katalysatortinte ; und
Hochschermischen der Katalysatortinte, aufweisend:
Durchführen des Ultraschallbehandelns vor dem Durchführen des Hochschermischens.

2. Verfahren nach Anspruch 1, aufweisend Durchführen des Ultraschallbehandelns bis zu einer Katalysatorteilchengröße in der Größenordnung von einem Mikrometer.

3. Verfahren nach Anspruch 1, wobei die Katalysatortinte eine Katalysatorphase, eine lonomerphase und einen Puffer aufweist.

4. Verfahren nach Anspruch 1, aufweisend Durchführen des Ultraschallbehandelns für eine Zeitdauer, die weniger als eine Stunde ist.

5. Verfahren nach Anspruch 1, aufweisend Durchführen des Ultraschallbehandelns für eine Dauer von weniger als fünf Stunden.

6. Verfahren nach Anspruch 1, aufweisend Durchführen des Hochschermischens für eine Zeitdauer von weniger als zehn Minuten.

7. Verfahren nach Anspruch 1, aufweisend Ablagern der Katalysatortinte auf einem Substrat.

8. Verfahren nach Anspruch 7, wobei die abgelagerte Katalysatortinte und das Substrat eine Brennstoffzellenkomponente aufweisen.

9. Verfahren nach Anspruch 8, wobei die Brennstoffzellenkomponente eine Membranelektrodenanordnung aufweist.

## Revendications

1. Procédé de traitement d'une encre de catalyseur, comprenant les étapes de :
ultrasonication d'une encre de catalyseur ; et
mélange à cisaillement élevé de l'encre de catalyseur, dans lequel
comprenant l'exécution de l'ultrasonication avant l'exécution du mélange à cisaillement élevé.

2. Procédé selon la revendication 1, comprenant l'exécution de l'ultrasonication jusqu'à une taille de particule de catalyseur de l'ordre d'un micron.

3. Procédé selon la revendication 1, dans lequel l'encre de catalyseur comprend une phase de catalyseur, une phase d'ionomère et un tampon.

4. Procédé selon la revendication 1, comprenant l'exécution de l'ultrasonication pendant une période de temps qui est inférieure à une heure.

5. Procédé selon la revendication 1, comprenant l'exécution de l'ultrasonication pendant une durée inférieure à cinq heures.

6. Procédé selon la revendication 1, comprenant l'exécution du mélange à cisaillement élevé pendant une période de temps inférieure à dix minutes.

7. Procédé selon la revendication 1, comprenant le dépôt de l'encre de catalyseur sur un substrat.

8. Procédé selon la revendication 7, dans lequel l'encre de catalyseur déposée et le substrat constituent un composant de pile à combustible.

9. Procédé selon la revendication 8, dans lequel le composant de pile à combustible comprend un ensemble formant électrode à membrane.
